# FASCICULE DE BREVET EUROPEEN

(11) **EP 3 089 912 B1**
(45) Date de publication et mention de la délivrance du brevet: **24.10.2018**
(21) Numéro de dépôt: 14816343.9
(22) Date de dépôt: 24.12.2014
(51) Int. Cl.: B64G 1/10, B64G 1/50, B64G 1/22, B64G 1/66

(54) **ARCHITECTURE DE SATELLITE DE TÉLÉCOMMUNICATIONS**
TELEKOMMUNIKATIONSSATELLITENARCHITEKTUR
TELECOMMUNICATIONS SATELLITE ARCHITECTURE

(30) Priorité: 30.12.2013 FR 1363690
(43) Date de publication de la demande: 09.11.2016
(73) Titulaire: Airbus Defence and Space SAS, 31402 Toulouse Cedex 4 (FR); THALES, 92200 Neuilly sur Seine (FR); Centre National d'Etudes Spatiales (CNES), 75001 Paris (FR)
(72) Inventeur: HACHE, Raphaël, F-06580 Pegomas (FR); TRANCART, Bruno, F-31320 Portet sur Garonne (FR); WALKER, Andrew, F-31320 Pechbusque (FR)
(74) Mandataire: Ipside
(86) Numéro de dépôt international: PCT/EP2014/079314
(87) Numéro de publication internationale: WO 2015/101581

(56) Documents cités:
- EP-A1- 0 647 559
- EP-A1- 0 891 926
- WO-A1-2010/111364
- US-A- 5 823 477
- US-A1- 2002 153 128
- US-A1- 2004 164 205

## Description

La présente invention relève du domaine des architectures de satellites de télécommunications stabilisés sur 3 axes.

### Préambule et art antérieur

Pour faire face au volume toujours croissant de télécommunications dans le monde, les satellites de télécommunications sont de plus en plus puissants. Leur charge utile électronique (tubes à ondes progressives notamment) dégage de ce fait une puissance thermique considérable, d'environ 60% de la puissance électrique du satellite, c'est à dire couramment de l'ordre de plusieurs kW, et le refroidissement de cette charge utile devient de plus en plus difficile à réaliser. Un autre phénomène vient amplifier ce problème. En effet, le nombre de positions libres en orbite géostationnaire est limité, ce qui oblige à concevoir des satellites toujours plus puissants à mettre à poste sur cette orbite, pour maximiser son utilisation. Diverses techniques ont été envisagées pour résoudre ce problème puissance / refroidissement pour des satellites de forte puissance. Un exemple est décrit dans le document US 5 823 477. Ce document est considéré comme l'art antérieur le plus proche et décrit les caractéristiques du préambule de la revendication 1.

La montée progressive des bandes de fréquences utilisées vers des fréquences plus élevées augmente encore ce problème, du fait des pertes concomitantes dans les guides d'ondes installés entre la charge utile et les antennes d'émission, ce qui oblige à augmenter encore la puissance électrique de la charge utile.

La présente invention a pour but de proposer une solution à tout ou partie de ces problèmes.

### Exposé de l'invention

L'invention vise à cet effet sous un premier aspect un satellite de télécommunications, de type stabilisé sur trois axes, notamment mais non limitativement destiné à être mis à poste en orbite géostationnaire, ledit satellite comportant une charge utile de télécommunication constitué d'un ensemble d'équipements dissipatifs, ledit satellite étant de forme sensiblement parallélépipédique dont les panneaux formant deux faces opposées, dites Est et Ouest, supportent des antennes d'émission de données, et les panneaux formant deux autres faces opposées, dites Nord et Sud, comportent sur leur face externe des surfaces de radiateurs destinées au refroidissement des équipements électroniques du satellite.

Les équipements de la charge utile comprennent notamment des éléments actifs RF tels que les amplificateurs de puissance RF (ATOP et SSPA) leur alimentations électriques (EPC), les pre-amplificateurs et linéariseur (CAMP) les multiplexeurs d'entrée (IMUX), des éléments passifs, tels que les OMUX, les switches et les guides d'onde et des électroniques digitales (processeurs charge utile).

Le satellite comprend aussi d'autres équipements pour la plateforme, qui assurent les fonctions de supports (alimentation électrique, communication avec le sol, contrôle d'attitude et d'orbite...). L'invention concerne l'aménagement des équipements de la charge utile et pas ceux de la plate-forme. L'homme de l'art fait facilement la différence entre les équipements de la plate-forme et ceux de la charge utile.

Dans un premier aspect de l'invention, le satellite est tel que les équipements de la charge utile installés sur les panneaux Nord et Sud dissipent une puissance thermique correspondant à moins de 25% de la puissance dissipée totale.

Un second aspect de l'invention est que les équipements électroniques de puissance éventuellement présents sur les murs nord et sud ont une dissipation correspondant à moins de 25% de la puissance dissipées par le total des équipements électroniques de la charge utile.

Par équipement électronique de puissance, on entend les amplificateurs de puissance RF (TWTA ou SSPA) et leurs alimentations (EPC) présents dans la charge utile du satellite de télécommunication.

De cette manière, la longueur des guides d'ondes à installer entre les équipements électroniques de puissance et les sources des antennes est nettement réduite, les équipements électroniques de puissance pouvant être disposés au voisinage immédiat des sources.

Ceci est particulièrement intéressant dans le cas de bandes de fréquences élevées, typiquement Ka, Q, V pour lesquelles les déperditions dans ces guides d'ondes deviennent considérables sur une longueur de quelques mètres. Ces déperditions obligent à augmenter encore la puissance des équipements pour obtenir une puissance d'émission suffisante, ce qui, comme on l'a vu, accroît le problème de contrôle thermique.

Dans l'art antérieur, la solution considérée de façon exclusive était l'installation des équipements fortement dissipatifs sur les panneaux Nord et Sud, au contact direct de ces faces refroidissantes, de manière à optimiser le contrôle thermique direct des équipements électroniques de puissance.

Dans cette nouvelle architecture, au contraire, on donne la priorité à l'efficacité de la charge utile vis-à-vis du contrôle thermique, et, paradoxalement, en réduisant la longueur des guides d'ondes entre la charge utile et les antennes d'émission, on réduit la puissance thermique perdue dans ces guides d'ondes, ce qui simplifie le contrôle thermique de l'ensemble pour des bandes de fréquences élevées.

L'invention permet de réduire la dissipation thermique et la consommation électrique, tout en maintenant le même niveau de puissance au niveau des antennes d'émission.

Un autre avantage de cette configuration est que la répartition de chaleur entre les panneaux Nord et Sud se fait alors naturellement, ce qui contribue à améliorer le refroidissement du satellite.

Suivant le premier aspect de l'invention, plus particulièrement, moins de 10% de la puissance dissipée totale est fournie par les équipements installés sur les panneaux Nord et Sud.

Dans un mode encore plus particulier de réalisation, aucun équipement dissipatif n'est installé sur les faces Nord et Sud. Cette disposition permet un démontage nettement facilité des faces Nord et Sud.

Dans un mode de réalisation particulier, les équipements installés sur les panneaux Est et ouest dissipent une puissance thermique correspondant à plus de 75% de la puissance dissipée totale.

Plus particulièrement, les équipements installés sur les panneaux Est et ouest dissipent une puissance thermique correspondant à plus de 90% de la puissance dissipée totale.

Dans un mode de réalisation particulier, plus de 75%, et préférentiellement plus de 90% de la puissance dissipée totale est dissipée à l'intérieur du satellite. On entend par intérieur du satellite l'espace entre les murs Nord, Sud et Est, Ouest.

Suivant le deuxième aspect de l'invention, plus particulièrement, moins de 10% de la puissance dissipée des équipements électroniques de puissance est fournie par les équipements électroniques de puissance installés sur les panneaux Nord et Sud

Dans un mode encore plus particulier de réalisation, aucun équipement électronique de puissance n'est installé sur les faces Nord et Sud.

Les modes de réalisations suivants concernent les deux aspects de l'invention.

Dans un mode de réalisation particulier, le satellite est tel qu'une partie au moins des équipements électroniques de puissance est installée sur les panneaux Est et Ouest, les panneaux Nord et Sud étant consacrés principalement ou exclusivement au refroidissement du satellite.

Dans un mode de réalisation plus particulier, plus de la moitié de la surface des faces Est et Ouest est dédiée à l'implantation d'équipement électroniques de puissance.

Dans un mode de réalisation particulier, des équipements électroniques de puissance sont installés sur au moins une face, et, dans un mode plus particulier de réalisation, sur les deux faces, d'au moins un des panneaux Est et Ouest.

En effet, le montage d'équipements électronique sur des panneaux non dédiés au refroidissement permet d'installer des équipements sur les deux faces de ces panneaux, ce qui double la surface utilisable pour le montage de la charge utile. Dans l'art antérieur, la surface nécessaire pour l'implantation de la charge utile, et la surface nécessaire pour rayonner la chaleur produite vers l'espace étaient sensiblement équivalentes.

Dans un mode de réalisation particulier, le satellite comporte au moins un panneau interne parallèle aux panneaux Est et Ouest, portant sur au moins une face des équipements électroniques de puissance. Le panneau peut porter sur ses deux faces des équipements électroniques de puissance.

La disposition des panneaux portant les équipements électroniques de puissance de façon perpendiculaire aux panneaux radiatifs Nord et Sud permet d'envisager de disposer plusieurs tels panneaux électroniques en parallèle, ces panneaux électroniques étant sensiblement perpendiculaires aux panneaux radiatifs. On parvient ainsi à une disposition de "cartes électroniques", de façon analogue à celle d'un ordinateur, le nombre de cartes pouvant être arbitrairement choisi en fonction du cahier des charges de la mission du satellite. Ces cartes, étant reliées aux panneaux radiatifs par leurs bords Nord et Sud, sont reliées à ces panneaux par des dispositifs de refroidissement, par exemple de type à boucle fluide.

Dans un mode de réalisation particulier, le satellite comporte au moins un dispositif de transfert de chaleur de type à boucle fluide dont les condenseurs sont disposés sur l'un au moins des panneaux Nord et Sud, ou à caloduc

Dans ce cas, les évaporateurs peuvent être disposés directement au contact des équipements électroniques de puissance, au niveau des panneaux Est et Ouest.

Dans un mode particulier de réalisation, au moins un des panneaux Nord et Sud est articulé autour d'une de ses arêtes communes avec les panneaux Est et Ouest, les boucles fluides ou les caloducs comportant des zones flexibles au voisinage de ladite articulation.

Dans un autre mode de réalisation, au moins un des panneaux nord ou sud est composé de deux demi-panneaux, articulés chacun autour de leur arête commune avec le panneau Est ou Ouest,

Cette disposition permet un accès au coeur du satellite très tard lors du processus d'intégration de celui-ci avant le lancement, ce que ne permettait pas l'art antérieur.

Dans un mode de réalisation particulier, le satellite comporte des panneaux radiatifs déployables. Dans ce cas, ces panneaux radiatifs déployables sont reliés par des dispositifs de transfert de chaleur, par exemple de type à boucle fluide, aux équipements installés sur les panneaux Est et Ouest.

La configuration choisie implique en effet la mise ne place de dispositifs de transfert de chaleur entre les panneaux Est et Ouest, portant les équipements dissipatifs, et les panneaux radiatifs Nord et Sud. Il n'y a donc pas de complexification supplémentaire à prolonger les tubes des boucles fluides pour les relier aux panneaux radiatifs déployables.

L'invention se traduit par la séparation des zones portant les équipements dissipatifs, et des zones radiatives vers l'espace, au contraire de l'art antérieur, dans lequel ces zones étaient identiques.

Cette séparation permet de dimensionner ces deux zones de façon indépendante.

Il est par exemple envisageable, dans le cas de charges utiles complexes comportant de nombreux équipements de relativement faible dissipation, d'utiliser de nombreuses "cartes" Est-Ouest portant des équipements électroniques, et d'utiliser les faces Nord et Sud pour le refroidissement.

Au contraire, il est également possible, dans le cas d'un nombre restreint d'équipements électroniques de très forte puissance, d'utiliser uniquement les faces externes des panneaux Est et Ouest pour le montage des équipements électroniques, et d'adjoindre des panneaux radiatifs déployables aux panneaux Nord et Sud pour assurer le refroidissement.

L'invention vise également un procédé d'intégration de satellite tel qu'exposé ci-dessus, le procédé comportant une étape d'ouverture d'un des panneaux Nord ou Sud pour accéder à la charge utile du satellite.

### Présentation des figures

Les caractéristiques et avantages de l'invention seront mieux appréciés grâce à la description qui suit, description qui expose les caractéristiques de l'invention au travers d'un exemple non limitatif d'application.

La description s'appuie sur les figures annexées qui représentent :
Figures 1a et 1b : une représentation schématique d'un satellite géostationnaire stabilisé sur 3 axes,
Figure 2 : une représentation des différentes attitudes du satellite lors de son orbite,
Figure 3 : une représentation schématique de la disposition des équipements électronique dans un satellite en vue de dessus, selon un mode de réalisation de l'invention,
Figure 4 : une représentation analogue, correspondant à l'art antérieur,
Figure 5 : une vue schématique en perspective du corps du satellite, illustrant l'implantation des boucles de refroidissement du satellite,
Figure 6 : une représentation schématique de la disposition des équipements électronique dans un satellite en vue de dessus, dans le cas d'une variante de réalisation comportant plusieurs panneaux parallèles porte équipements,
Figure 7 : une vue schématique en perspective du corps du satellite,, dans le cas de la même variante,
Figure 8 : une vue de dessus illustrant la disposition de radiateurs de tubes à ondes progressives, dans une variante de réalisation de l'invention,
Figures 9a et 9b : des schémas résumant les pertes de puissance en bande Ku selon que les guides d'ondes ont une longueur de 2m ou de 4m.

### Description détaillée d'un mode de réalisation de l'invention

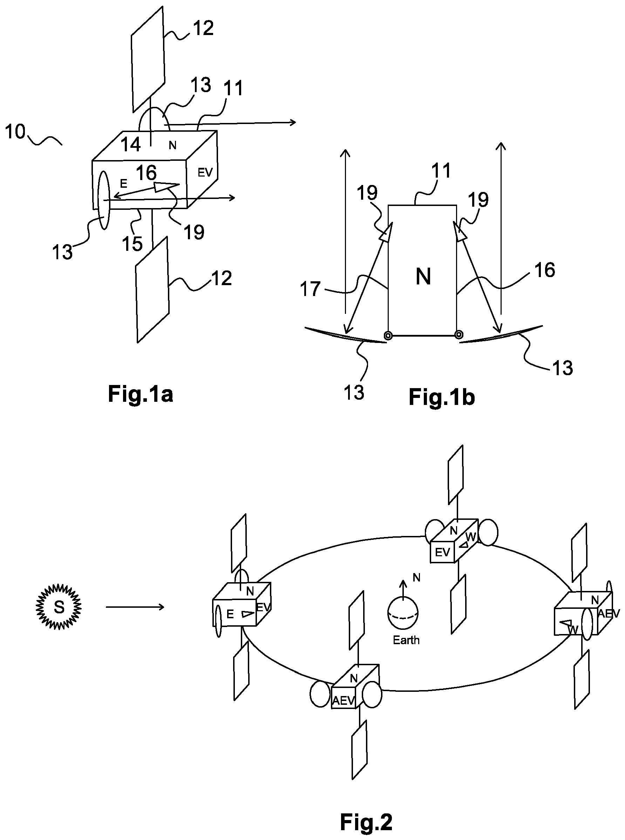

La présente invention est destinée à être utilisée sur un satellite du type stabilisé sur 3 axes, destiné, dans le présent exemple, à être mis à poste en orbite géostationnaire. Il s'agit, par exemple, mais non limitativement, d'un satellite de télécommunications. Comme on le voit sur les figures 1a et 1b, dans un exemple purement illustratif et nullement limitatif, on suppose ici qu'il s'agit d'un satellite **10** comportant un corps **11** de forme sensiblement parallélépipédique, dont les centres des faces définissent des axes X, Y, Z.

Lorsque le satellite 10 est placé à poste sur son orbite (voir figure 2) ses faces sont orientées de telle sorte qu'un axe Y dit Nord-Sud est parallèle à l'axe de rotation de la Terre, un axe X dit Est-Ouest est parallèle à l'axe de déplacement du satellite sur soin orbite, et un axe Z dit Terre-antiTerre est perpendiculaire aux deux autres.

Le satellite GEO 10 présente toujours la même face vers la Terre, et ses faces Nord **14** et Sud **15** sont les moins illuminées par le soleil, lors de l'orbite du satellite autour de la Terre. Dans le présent exemple, le satellite 10 considéré comporte des panneaux solaires **12** attachés à ces faces Nord 14 et Sud 15, car de la sorte, ces panneaux solaires 12 restent en permanence hors de l'ombre générée par le satellite lui-même. Ces faces Nord 14 et Sud 15 comportant également usuellement des radiateurs (non illustrés sur la figure), tirant ainsi parti de leur faible exposition au Soleil.

Le satellite 10 comporte par ailleurs des réflecteurs **13,** disposées sur les faces Est **16** et Ouest **17,** et faisant ainsi toujours face à la Terre lors de l'orbite du satellite 10. Ces réflecteurs 13 réfléchissent vers la Terre les signaux émis par des sources en forme de cornets **19,** les signaux à émettre étant générés par un ensemble d'équipements électroniques, notamment des tubes à ondes progressives.

Cette architecture générale du satellite 10 est bien connue de l'homme du métier, et sort en tant que telle du cadre de l'invention. Elle n'est donc pas décrite plus avant ici.

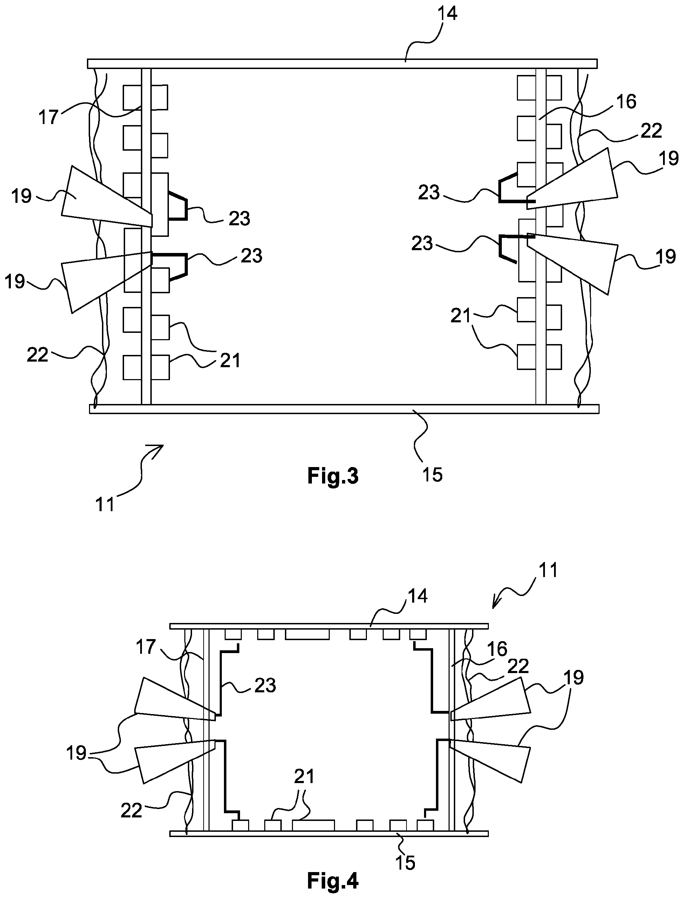

La figure 3 illustre alors, de façon schématique, un cas de mise en oeuvre de l'invention. Cette figure est une vue de dessus (selon l'axe Terre-antiTerre), en supposant retirés les panneaux fermant les faces Terre et antiTerre. On y reconnaît les panneaux formant les faces Nord 14 et Sud 15 du satellite 10 en haut et en bas sur la figure 3, et les panneaux formant les faces Est 16 et Ouest 17 du satellite sur les côtés gauche et droit de la figure 3. On y reconnaît également les réflecteurs 13 et les cornets 19, installées sur les faces Est 16 et Ouest 17 du corps 12 du satellite 10.

Comme on le voit ici, dans la mise en oeuvre donnée ici à titre d'exemple, les équipements électroniques de puissance **21** sont installés sur les panneaux Est et Ouest, et sur les deux côtés de ces panneaux 16, 17, c'est à dire aussi bien à l'intérieur du parallélépipède rectangle formant le corps 11 du satellite 10, qu'à l'extérieur de celui-ci. Les équipements électroniques 21 installés à l'extérieur du corps du satellite 10 sont protégés des rayonnements par une couverture de protection **22,** par exemple un isolant multicouche (« Multi Layer Insulation ») de type connu en soi. Les cornets 19 sont reliés aux équipements électroniques de puissance 21 par des guides d'ondes **23,** de courte longueur du fait de la proximité des équipements électroniques 22 et de ces cornets 19.

Les modes de montage des équipements électroniques 22 sur les panneaux Est 16 et Ouest 17 sont connus en soi.

Comme on le voit à titre de comparaison sur la figure 4, dans l'art antérieur, les équipements électroniques 22 étaient installés sur les panneaux Nord 14 et Sud 15, et reliés aux cornets 19 par des guides d'ondes **23** nettement plus longs que dans la mise en oeuvre de l'invention, telle qu'illustrée par la figure 3. De plus, ces équipements électroniques 22 étaient installés uniquement sur la face interne des panneaux Nord 14 et Sud 15, la face externe étant utilisée pour servir de radiateur vers l'espace.

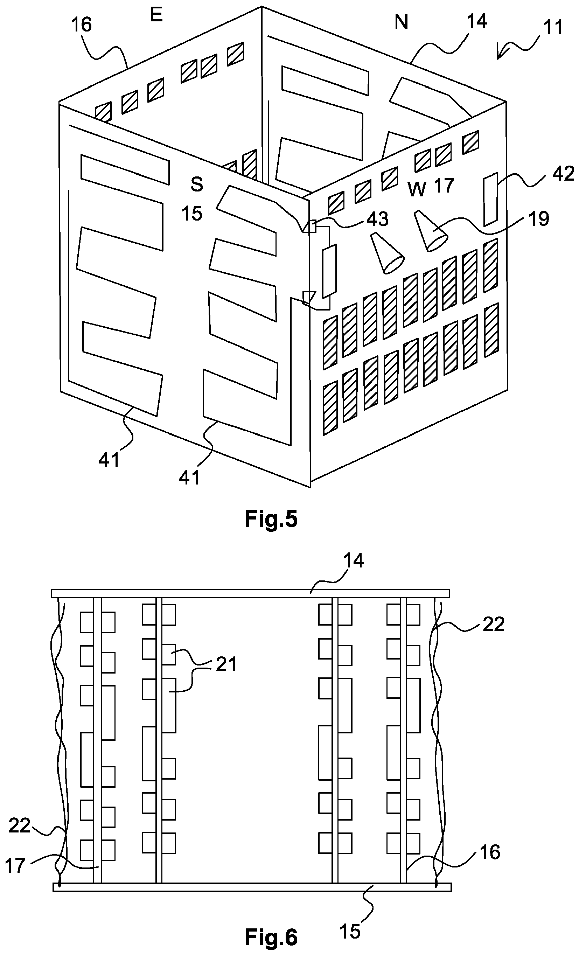

La figure 5 montre alors, en vue en perspective, les panneaux Nord, Sud, Est et Ouest du corps 12 du satellite 10. On reconnaît sur cette figure les cornets 19, les équipements électronique 22 installés sur les deux faces des panneaux Est et Ouest. La figure est donnée dans le cas non limitatif d'un refroidissement des équipements électroniques 22 par refroidisseur de type à boucle fluide. Les panneaux Nord et Sud comportent ici des réseaux **41** de tubes de condensation, qui viennent serpenter sur les faces externes de ces panneaux Nord et Sud, de manière à assurer un bon couplage thermique avec ces faces. Les panneaux Est et Ouest portent, quant-à eux, des évaporateurs **42,** disposés sur les panneaux au voisinage des équipements électroniques 22, ou directement à leur contact.

Il est à noter que d'autres systèmes de refroidissement connus de l'homme de l'art peuvent également être utilisés, tel que par exemple en utilisant un dispositif de refroidissement à caloduc au lieu d'une boucle fluide.

Les tubes reliant les évaporateurs 42 au réseau de condenseurs 41 comportent ici des zones flexibles **43,** au voisinage des jonctions entre les panneaux Est et Ouest, d'une part, et Nord et Sud, d'autre part.

Les panneaux Nord et Sud sont en effet ici articulés en rotation autour d'un axe Terre-antiTerre, le long d'une ligne de contact entre ces panneaux Nord et Sud et les panneaux Est et Ouest. Dans le présent exemple non limitatif, chaque panneau Nord et Sud est formé de deux demi-panneaux, articulés chacun autour d'un bord de panneau Est ou Ouest. De la sorte, les demi-panneaux Nord (et / ou Sud) peuvent s'ouvrir à la manière de porte pour donner accès à l'intérieur du corps 12 du satellite 10, avant son lancement.

Dans une première variante de mise en oeuvre, l'ensemble du panneau nord (ou sud) pivote, ce qui suppose que les boucles fluides soient démontable sur l'un des côtés.

Dans une seconde variante, le panneau s'ouvre en deux, ce qui suppose qu'il n'y a pas de circuit de boucle fluide passant d'un demi-panneau à l'autre, dans ce cas l'accès se fait sans démonter de boucles.

Dans les deux cas l'intérêt majeur est l'accès aux équipements sans affecter les connections électriques et surtout RF (guide d'onde rigides)

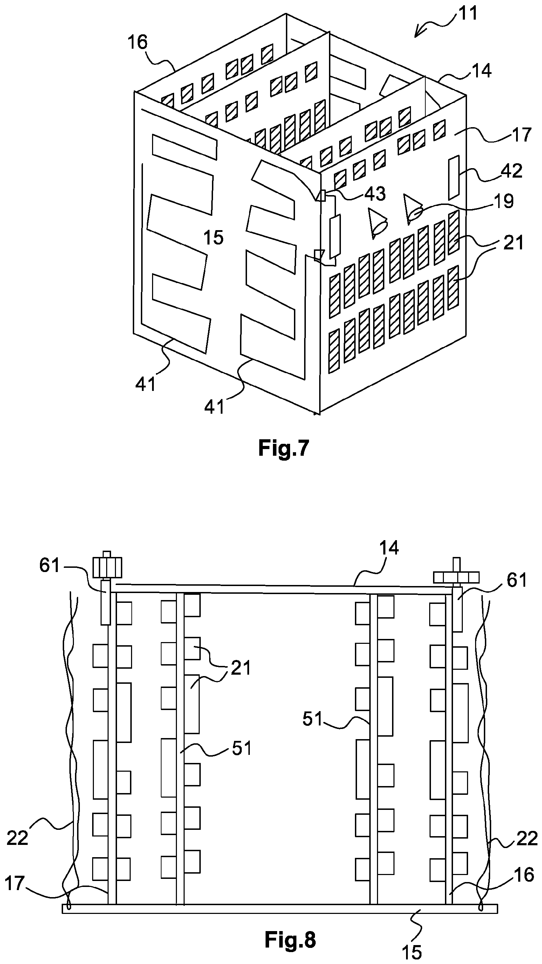

Dans une variante de réalisation illustrée par les figures 6 et 7, le satellite comporte des panneaux intermédiaires **51,** parallèles aux panneaux Est et Ouest. Chacun de ces panneaux intermédiaires supporte des équipements électroniques 22 sur une ou ses deux faces, selon les besoins de la mission de satellite et l'espace disponible au sein du corps du satellite 10. Dans le présent exemple de réalisation, chacun de ces panneaux intermédiaires 51 comporte également au moins un évaporateur, relié à un réseau 41 de tubes de condensation sur les panneaux Nord et / ou Sud. On a illustré ici deux panneaux intermédiaires dans le présent exemple, mais le nombre de ces panneaux peut varier selon les besoins de mission. De même, leurs distances relatives sont fonctions des exigences des équipements portés et de l'architecture interne du satellite 10.

Les modes d'attache des panneaux entre eux sont de type connu de l'homme du métier et sortent du cadre de la présente invention.

La figure 8 montre un détail d'implantation de radiateurs de tube à onde progressive dans le cas d'installation d'équipements électroniques 22 sur les panneaux Est et Ouest. Comme on le voit sur cette figure, des radiateurs de tubes à ondes progressives **61** peuvent être installés le long des arêtes reliant les panneaux latéraux, de façon à ce que les tubes à ondes progressives soient implantés sur les faces Est ou Ouest, les radiateurs faisant, quant-à-eux, face au Nord ou au Sud.

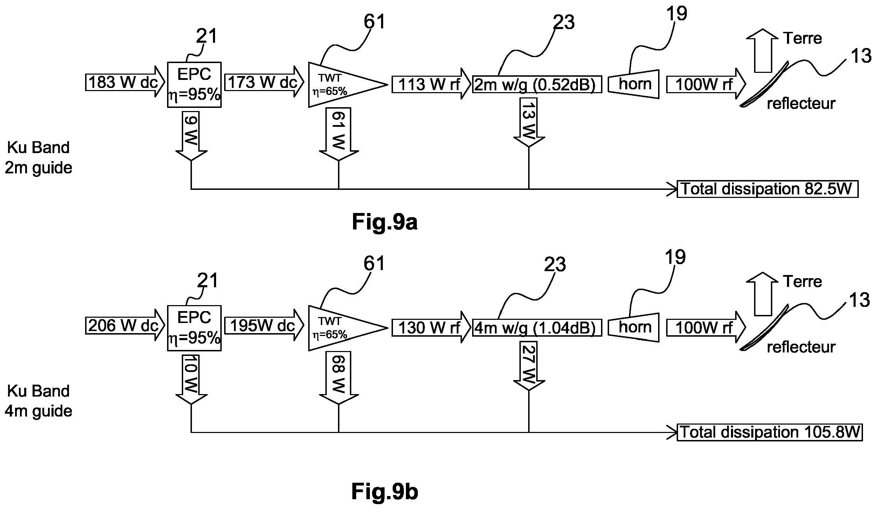

Les figures 9a et 9b mettent en évidence les puissances dissipées, dans le cas de guide d'onde de 2 mètres de long (figure 9a) et de 4 mètres de long (figure 9b). Les données numériques sont ici citées à titre de simple exemple illustratif, dans le cas d'un satellite opérant en bande Ku.

Comme on le voit sur la figure 9a, dans le cas d'un guide d'onde de 2 m de longueur, pour une puissance émise vers la Terre de 100 Watts, les pertes sont de 82 Watts, avec une puissance totale consommée de 182 Watts. Au contraire, dans le cas d'un guide d'onde de 4 mètres de longueur, les pertes sont de 106 watts, pour une même puissance émise de 100 watts. Le gain sur la puissance totale consommée est donc de 10%.

## Revendications

1. Satellite (10) de télécommunications, de type stabilisé sur trois axes, destiné à être mis à poste en orbite géostationnaire, ledit satellite comportant un ensemble d'équipements dissipatifs, constituant la charge utile de télécommunication du satellite, ledit satellite étant de forme sensiblement parallélépipédique dont les panneaux formant deux faces opposées, dites Est (16) et Ouest (17), supportent des antennes (19) d'émission de données, et les panneaux formant deux autres faces opposées, dites Nord (14) et Sud (15), comportent sur leur face externe des surfaces de radiateurs destinées au refroidissement des équipements électroniques du satellite,
**caractérisé en ce que** les équipements installés sur les panneaux Nord (14) et Sud (15) dissipent une puissance thermique correspondant à moins de 25% de la puissance dissipée totale.

2. Satellite (10) selon la revendication 1, **caractérisé en ce que** les équipements installés sur les panneaux Nord (14) et Sud (15) dissipent une puissance thermique correspondant à moins de 10% de la puissance dissipée totale.

3. Satellite (10) selon la revendication 1, **caractérisé en ce qu'**aucun équipement dissipatif n'est installé sur les faces Nord (14) et Sud (15).

4. Satellite (10) selon l'une quelconque des revendications 1 à 3, **caractérisé en ce que** les équipements installés sur les panneaux Est (16) et Ouest (17) dissipent une puissance thermique correspondant à plus de 75% de la puissance dissipée totale.

5. Satellite (10) selon la revendication 4, **caractérisé en ce que** les équipements installés sur les panneaux Est (16) et Ouest (17) dissipent une puissance thermique correspondant à plus de 90% de la puissance dissipée totale.

6. Satellite (10) selon la revendication 1, caractérisé en ce plus de 75% de la puissance dissipée totale est dissipée à l'intérieur du satellite, c'est à dire dans l'espace entre les murs Nord (14), Sud (15) et Est (16), Ouest (17).

7. Satellite (10) selon la revendication 6, caractérisé en ce plus de 90% de la puissance dissipée totale est dissipée à l'intérieur du satellite (10).

8. Satellite (10) selon l'une quelconque des revendications 1 à 7, **caractérisé en ce qu'**une partie au moins des équipements électroniques de puissance (21) est installée sur les panneaux Est (16) et Ouest (17).

9. Satellite (10) selon la revendication 8, **caractérisé en ce que** des équipements électroniques de puissance sont installés sur les deux faces d'au moins un des panneaux Est (16) et Ouest (17).

10. Satellite (10) selon l'une quelconque des revendications 1 à 9, **caractérisé en ce que** le satellite comporte au moins un panneau interne (51) parallèle aux panneaux Est (16) et Ouest (17), portant sur au moins une face des équipements électroniques de puissance (21).

11. Satellite (10) selon la revendication 10, **caractérisé en ce qu'**au moins un panneau interne (51) porte des équipements électroniques de puissance (21) sur ses deux faces.

12. Satellite (10) selon l'une quelconque des revendications 1 à 11, **caractérisé en ce que** le satellite comporte au moins un dispositif de transfert de chaleur à caloduc ou de type à boucle fluide dont les condenseurs sont disposés sur l'un au moins des panneaux Nord (14) et Sud (15).

13. Satellite (10) selon l'une quelconque des revendications 1 à 12, **caractérisé en ce qu'**au moins un des panneaux Nord (14) et Sud (15) est articulé autour d'une de ses arêtes communes avec les panneaux Est (16) et Ouest (17), les boucles fluides ou les caloducs comportant des zones flexibles (43) au voisinage de ladite articulation.

14. Satellite (10) selon l'une quelconque des revendications 1 à 13, **caractérisé en ce qu'**au moins un des panneaux Nord (14) ou Sud (15) est composé de deux demi-panneaux, articulés chacun autour de leur arête commune avec le panneau Est (16) ou Ouest (17).

15. Satellite (10) selon l'une quelconque des revendications 1 à 14, **caractérisé en ce que** le satellite comporte des panneaux radiatifs déployables, reliés par des dispositifs de transfert de chaleur, par exemple de type à boucle fluide, aux équipements installés sur les panneaux Est (16) et Ouest (17).

16. Procédé d'intégration d'un satellite de télécommunications (10) selon l'une quelconque des revendications 1 à 15, **caractérisé en ce que** le procédé comportant une étape d'ouverture d'un des panneaux Nord (14) ou Sud (15) pour accéder à la charge utile du satellite.

## Patentansprüche

1. Telekommunikationssatellit (10), vom Typ dreiachsenstabilisiert, der dazu bestimmt ist, auf der geostationären Umlaufbahn abgesetzt zu werden, wobei der Satellit eine Gesamtheit von dissipativen Einrichtungen umfasst, welche die Telekommunikationsnutzlast des Satelliten bilden, wobei der Satellit im Wesentlichen die Form eines Quaders hat, dessen Platten, die zwei gegenüberliegende Seiten bilden, genannt Ost (16) und West (17), Antennen (19) zur Datenausgabe stützen, und wobei die Platten, die zwei weitere gegenüberliegende Seiten bilden, genannt Nord (14) und Süd (15), auf ihrer Außenseite Kühlkörperflächen umfassen, die zum Kühlen der elektronischen Einrichtungen des Satelliten bestimmt sind, **dadurch gekennzeichnet, dass** die Einrichtungen, die auf den Platten Nord (14) und Süd (15) installiert sind, eine Wärmeleistung abführen, die weniger als 25 % der Gesamtverlustleistung entspricht.

2. Satellit (10) nach Anspruch 1, **dadurch gekennzeichnet, dass** die Einrichtungen, die auf den Platten Nord (14) und Süd (15) installiert sind, eine Wärmeleistung abführen, die weniger als 10 % der Gesamtverlustleistung entspricht.

3. Satellit (10) nach Anspruch 1, **dadurch gekennzeichnet, dass** keine dissipative Einrichtung auf den Seiten Nord (14) und Süd (15) installiert ist.

4. Satellit (10) nach einem der Ansprüche 1 bis 3, **dadurch gekennzeichnet, dass** die Einrichtungen, die auf den Platten Ost (16) und West (17) installiert sind, eine Wärmeleistung abführen, die mehr als 75 % der Gesamtverlustleistung entspricht.

5. Satellit (10) nach Anspruch 4, **dadurch gekennzeichnet, dass** die Einrichtungen, die auf den Platten Ost (16) und West (17) installiert sind, eine Wärmeleistung abführen, die mehr als 90 % der Gesamtverlustleistung entspricht.

6. Satellit (10) nach Anspruch 1, **dadurch gekennzeichnet, dass** mehr als 75 % der Gesamtverlustleistung im Inneren des Satelliten abgeführt wird, das heißt in dem Raum zwischen den Wänden Nord (14), Süd (15) und Ost (16), West (17).

7. Satellit (10) nach Anspruch 6, **dadurch gekennzeichnet, dass** mehr als 90 % der Gesamtverlustleistung im Inneren des Satelliten (10) abgeführt wird.

8. Satellit (10) nach einem der Ansprüche 1 bis 7, **dadurch gekennzeichnet, dass** mindestens ein Teil der elektronischen Leistungseinrichtungen (21) auf den Platten Ost (16) und West (17) installiert ist.

9. Satellit (10) nach Anspruch 8, **dadurch gekennzeichnet, dass** elektronische Leistungseinrichtungen auf den zwei Seiten von mindestens einer der Platten Ost (16) und West (17) installiert sind.

10. Satellit (10) nach einem der Ansprüche 1 bis 9, **dadurch gekennzeichnet, dass** der Satellit mindestens eine Innenplatte (51) parallel zu den Platten Ost (16) und West (17) umfasst, die auf mindestens einer Seite elektronische Leistungseinrichtungen (21) trägt.

11. Satellit (10) nach Anspruch 10, **dadurch gekennzeichnet, dass** mindestens eine Innenplatte (51) elektronische Leistungseinrichtungen (21) auf ihren zwei Seiten trägt.

12. Satellit (10) nach einem der Ansprüche 1 bis 11, **dadurch gekennzeichnet, dass** der Satellit mindestens eine Wärmeübertragungsvorrichtung mit Wärmerohr oder von der Art mit Fluidringleitung umfasst, deren Kondensatoren auf mindestens einer der Platten Nord (14) und Süd (15) angeordnet sind.

13. Satellit (10) nach einem der Ansprüche 1 bis 12, **dadurch gekennzeichnet, dass** mindestens eine der Platten Nord (14) und Süd (15) um eine ihrer gemeinsamen Kanten mit den Platten Ost (16) und West (17) gelenkig gelagert ist, wobei die Fluidringleitungen oder Wärmerohre flexible Bereiche (43) in der Nähe des Gelenks umfassen.

14. Satellit (10) nach einem der Ansprüche 1 bis 13, **dadurch gekennzeichnet, dass** mindestens eine der Platten Nord (14) und Süd (15) aus zwei Plattenhälften besteht, die jeweils um ihre gemeinsame Kante mit der Platte Ost (16) oder West (17) gelenkig gelagert sind.

15. Satellit (10) nach einem der Ansprüche 1 bis 14, **dadurch gekennzeichnet, dass** der Satellit entfaltbare Abstrahlplatten umfasst, die durch Wärmeübertragungsvorrichtungen, zum Beispiel von der Art mit Fluidringleitung, mit den Einrichtungen verbunden sind, die auf den Platten Ost (16) und West (17) installiert sind.

16. Verfahren zur Integration eines Telekommunikationssatelliten (10) nach einem der Ansprüche 1 bis 15, **dadurch gekennzeichnet, dass** das Verfahren einen Schritt des Öffnens einer der Platten Nord (14) oder Süd (15) für den Zugang zur Nutzlast des Satelliten umfasst.

## Claims

1. Telecommunications satellite (10), of the type which is stabilized on three axes, intended to be stationed in geostationary orbit, said satellite comprising a set of dissipative equipment, constituting the telecommunication payload of the satellite, said satellite being of substantially parallelepiped shape, the panels of which forming two opposite faces, termed East (16) and West (17), support data transmission antennas (19), and the panels forming two other opposite faces, termed North (14) and South (15), comprise on their external face radiator surfaces intended for cooling the electronic equipment of the satellite,
**characterised in that** the equipment installed on the North (14) and South (15) panels dissipate a thermal power corresponding to less than 25% of the total dissipated power.

2. Satellite (10) according to claim 1, **characterised in that** the equipment installed on the North (14) and South (15) panels dissipate a thermal power corresponding to less than 10% of the total dissipated power.

3. Satellite (10) according to claim 1, **characterised in that** no dissipative equipment is installed on the North (14) and South (15) faces.

4. Satellite (10) according to any of claims 1 to 3,
**characterised in that** the equipment installed on the East (16) and West (17) panels dissipate a thermal power corresponding to more than 75% of the total dissipated power.

5. Satellite (10) according to claim 4, **characterised in that** the equipment installed on the East (16) and West (17) panels dissipate a thermal power corresponding to more than 90% of the total dissipated power.

6. Satellite (10) according to claim 1, **characterised in that** more than 75% of the total dissipated power is dissipated inside the satellite, i.e. in the space between the North (14), South (15) and East (16), West (17) walls.

7. Satellite (10) according to claim 6, **characterised in that** more than 90% of the total dissipated power is dissipated inside the satellite (10).

8. Satellite (10) according to any of claims 1 to 7,
**characterised in that** at least a portion of the power electronic equipment (21) is installed on the East (16) and West (17) panels.

9. Satellite (10) according to claim 8, **characterised in that** power electronic equipment is installed on the two faces of at least one of the East (16) and West (17) panels.

10. Satellite (10) according to any of claims 1 to 9,
**characterised in that** the satellite comprises at least one internal panel (51) parallel to the East (16) and West (17) panels, carrying power electronic equipment (21) on at least one face.

11. Satellite (10) according to claim 10, **characterised in that** at least one internal panel (51) carries power electronic equipment (21) on its two faces.

12. Satellite (10) according to any of claims 1 to 11,
**characterised in that** the satellite comprises at least one heat transfer device with a heat pipe or of the fluid loop type of which the condensers are arranged on at least one of the North (14) and South (15) panels.

13. Satellite (10) according to any of claims 1 to 12,
**characterised in that** at least one of the North (14) and South (15) panels is articulated around one of its edges shared with the East (16) and West (17) panels, the fluid loops or the heat pipes comprising flexible zones (43) in the vicinity of said articulation.

14. Satellite (10) according to any of claims 1 to 13,
**characterised in that** at least one of the North (14) or South (15) panels is comprised of two half-panels, each articulated around their edge shared with the East (16) or West (17) panel.

15. Satellite (10) according to any of claims 1 to 14,
**characterised in that** the satellite comprises deployable radiative panels, connected by heat transfer devices, for example of the fluid loop type, to the equipment installed on the East (16) and West (17) panels.

16. Method for integrating a telecommunications satellite (10) according to any of claims 1 to 15, **characterised in that** the method comprises a step of opening one of the North (14) or South (15) panels in order to access the payload of the satellite.
